(19) **Europäisches Patentamt / European Patent Office / Office européen des brevets**

(11) **EP 1 137 215 B1**

(12) **EUROPEAN PATENT SPECIFICATION**

(45) Date of publication and mention of the grant of the patent:
**18.04.2007 Bulletin 2007/16**

(51) Int Cl.:
**_H04L 1/00_** $^{(2006.01)}$

(21) Application number: **00400829.8**

(22) Date of filing: **24.03.2000**

(54) **Bitrate optimisation in a cellular communications system**

Bitratenoptimierung in einem zellularen Kommunikationssystem

Optimisation de débit dans un système de communication cellulaire

(84) Designated Contracting States:
**AT BE CH CY DE DK ES FI FR GB GR IE IT LI LU MC NL PT SE**
Designated Extension States:
**AL LT LV MK RO SI**

(43) Date of publication of application:
**26.09.2001 Bulletin 2001/39**

(73) Proprietor: **MOTOROLA, INC.**
**Schaumburg, IL 60196 (US)**

(72) Inventors:
• **Abdesselem, Ouelid**
**31000 Toulouse (FR)**

• **Fouilland, Pascal**
**31170 Tournefeuille (FR)**

(74) Representative: **Cross, Rupert Edward Blount et al**
**Boult Wade Tennant**
**Verulam Gardens**
**70 Gray's Inn Road**
**London WC1X 8BT (GB)**

(56) References cited:
**EP-A- 0 966 116**   **EP-A- 1 006 695**
**WO-A-99/12304**   **US-A- 5 701 294**

**Description**

This invention relates to bitrates in cellular communications systems. More specifically, this invention relates to throughput capabilities of a mobile subscriber or station (MS) within a cellular communications system.

Within global package radio service (GPRS) and enhanced GPRS systems, an MS indicates to the network its multislot capability, i.e. the number of time slots (TS) which it supports in the uplink and downlink directions. In GPRS systems, data to be transmitted is transmitted in time frames. Each frame comprises eight time slots. The communication between an MS and the network is termed uplink and between the network and an MS is termed downlink.

Each TS may utilise one of a number of different modulation and coding schemes. The choice is dependent upon the quality of the radio link between the MS and the network. In a GPRS system, four coding schemes are available (CS-1 to CS-4), and in an EGPRS system, nine modulation and coding schemes are available (MCS-1 to MCS-9).

The network allocates resource, i.e. time slots, to the MS in accordance with its multislot class. The multislot class is an indication of the maximum number of uplink, downlink and concurrent link time slots the MS can handle. However, the bitrate per time slot may vary considerably depending upon the CS or MCS used. As an example, in a GPRS system, CS-1 provides a TS bitrate of 9.2 kbits/s and CS-4 provides a TS bitrate of 21.55 kbits/s. Similarly, in an EGPRS system, MCS-1 provides a TS bitrate of 10.45 kbits/s, whereas MCS-9 provides a TS bitrate of 61.4 kbits/s.

However, an MS may have internal constraints which prevent it from utilising some of the bitrates provided by the network with which it is communicating. For example, the MS itself may be capable of accepting data at a bitrate of 61.4 kbits/s, but one or more of the layers of control associated with communication between an MS and a network may be unable to deal with data at that bitrate. This may be due to interface limitations, or layer 1 (L1) and layer 3 (L3) capacities for example. L1 and L3 are control and traffic layers within the system. If this is the case, the multislot class of the MS will have to downgraded, because the MS will not support high CSs or MCSs on all of its time slots. Downgrading of the multislot class has a negative impact on the MS throughput in medium or bad radio conditions.

As an example, an EGPRS MS which has an internal constraint of 300 kbits/s will be unable to handle more than 4TS, because 5TS utilising MCS-9 will exceed the constraint (5TS x 61.4 Kbits/s = 307.5 kbits). This is the case even though, from the hardware point of view, the MS could adequately utilise all the time slots. In this example, with medium radio conditions prevalent during a data exchange between an MS and a network, if MCS-4 (=19.25 kbits/s per time slot) modulation encoding were used, the MS throughput would be limited to 4TS x 19.25 kbits/s = 77 kbits/s even though the MS hardware could perform 8TS x 19.25 kbits/s = 154 Kbitsls. It should be noted that this rate, achieved if 8TS were used, is well below the internal constraint of the exemplary MS. It is therefore a problem associated with state of the art systems, that MS throughput in medium to poor radio conditions is severely hampered by the fixed allocation of time slots. The fixing of time slot allocation prevent the MS maximum bitrate from being H s exceeded when the level of coding yielding the highest amount of data throughput is utilised.

At present, a mean bitrate is negotiated between an MS and a serving GPRS support node (SGSN), a network entity, during Packet Data Protocol (PDP) context activation. This negotiation is transparent to a base station system BSS (which comprises a base transceiver station (BTS) and a base station controller (BSC)). The SGSN uses this information to indicate peak bitrate to the BSS in the Quality of Service (QoS) profile for the network. The BSS simply uses the QoS to allocate radio resources to the MS in an implementation dependent fashion. Further, the peak bitrate determined fails to consider potential repetitions from the radio interface between the MS and the network leading to a high radio link control/medium access control (RLC/MAC) level bitrate resulting from a low logical link control (LLC) level bitrate. RLC/MAC and LLC are levels of control between, and associated with, the MS and the network. This will be appreciated as a further problem inherent in present methods and systems.

As will be appreciated from the above, in current GPRS/EGPRS systems, the MS is unable to use bitrate information to control the radio interface bitrate.

US patent no. 5,701,294 discloses a system for dynamically adapting the user bit rate of a TDMA cellular telecommunication system to achieve optimum voice quality over a board range of radio channel conditions. The system continuously monitors radio channel quality on both the uplink and the downlink, and dynamically adapts the system's combination of speech coding, channel coding, modulation, and number of assignable time slots per call to optimize voice quality for the measured conditions.

The present invention addresses some or all of the above disadvantages.

The present invention provides, as claimed in the appendent claims, a method for, and system of, maximising the throughput of data in a cellular communications system, utilising a maximum bitrate, and a method for, and system of, providing a substantially stable bitrate in a cellular communications system in varying radio conditions, utilising a maximum bitrate.

According to a preferred embodiment of the present invention there is provided a method of maximising the throughput of data in a cellular communications system, wherein the maximum bitrate constraint associated with an MS is transmitted to a network. The maximum bitrate may be transmitted to a network in different manners according to the type of temporary block flow (TBF) to be employed. If an uplink TBF is to be employed, the bitrate is transmitted with the MS multislot class. The bitrate may be transmitted during two phase access, wherein information is sent as part of a PACKET RESOURCE REQUEST. If a downlink TBF is to be employed, the bitrate is sent by the MS to the SGSN where it is stored as a part of the MS radio access capabilities. The SGSN may send the MS radio access capabilities to a BSS in the network when a request for the establishment of a downlink TBF is made. If a concurrent TBF is to be employed, the bitrate may be transmitted with the MS multislot class and to the SGSN where it may be stored as part of the MS radio access capabilities.

A BSS may determine a number of time slots to be used in a transmission, those TSs being part of a number of TSs allocated to the MS for communication purposes, and further determine a level of coding, or modulation and coding, to be used with each time slot. This may be done to ensure that the best throughput is achieved under current radio conditions whilst ensuring that the MS's maximum bitrate constraint is not exceeded. Further, prevalent radio conditions may be monitored and, if necessary, the number of TSs used and/or the coding, or modulation and coding, scheme used may be adjusted to retain the maximum possible throughput, whilst remaining within the MS's bitrate constraint.

Additional specific advantages of the present invention will be apparent from the following description and figures, in which:

Figure 1 shows a mobile station informing a network of its radio access capabilities;
Figure 2 details the sending of bitrate information to a network of the TBF type;
Figure 3 shows GPRS bitrates in terms of TS and CS;
Figure 4 shows EGPRS bitrates in terms of TS and MCS; and
Figure 5 shows a flow diagram illustrating the operation of an allocation algorithm.

The present invention is now described with reference to the accompanying drawings as detailed above.

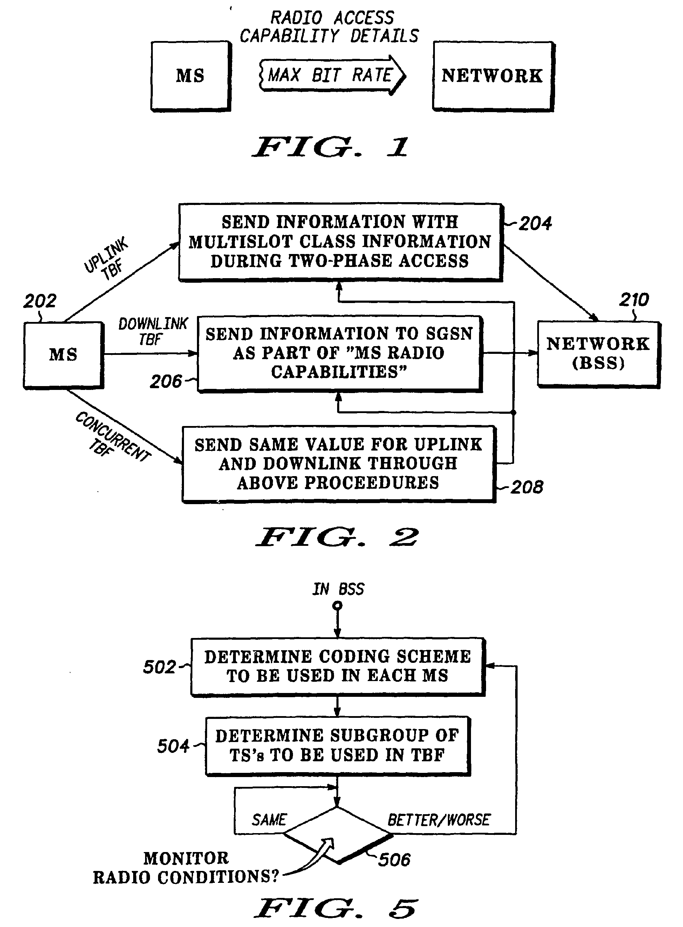

As may be seen in Figure 1, an extra piece of information is added to an MS's radio access capability details. These details are passed to the network in order to notify the network of the MS's capacity regarding TSs. The new information consists of an indication of the maximum bitrate before channel coding (for an uplink temporary block flow (UL-TBF)), and after channel coding (for a downlink temporary block flow (DL-TBF)). For an uplink temporary block flow a specific factor, $\lambda$, is used to account for the fact that uplink is less restrictive than downlink because of the requirement for equalisation, channel decoding and incremental redundancy in a downlink. For concurrent TBF's i.e. downlink and uplink TBF's established concurrently, the maximum bitrate is the sum of the downlink maximum bitrate and the uplink maximum bitrate with $\lambda$ applied.

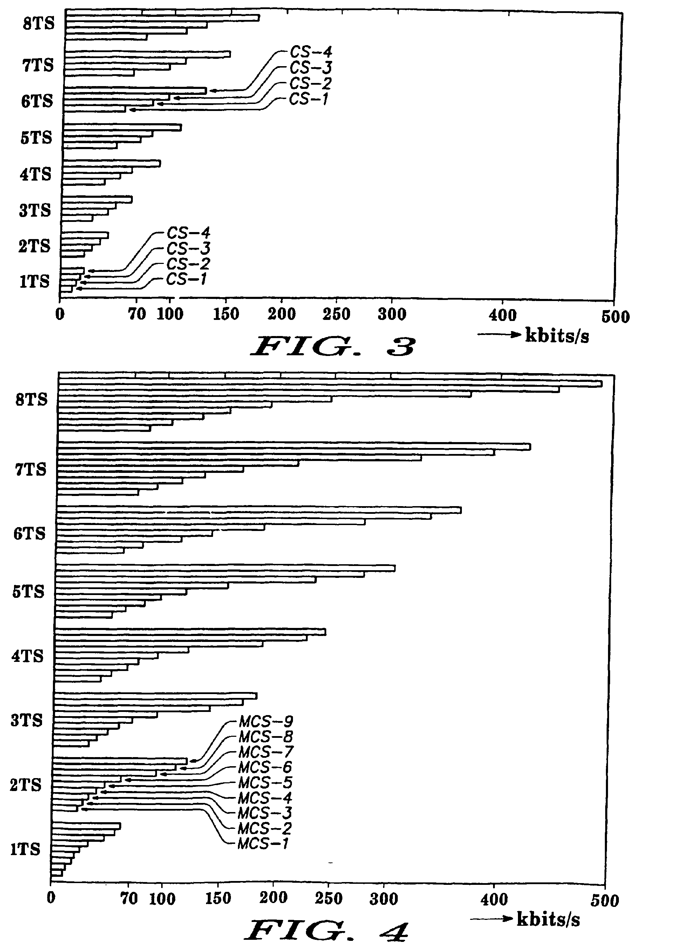

Figure 2 details how the additional information detailed above is conveyed to the network BSS. If an uplink TBF is to be established, the MS 202 sends the maximum bitrate information with the multislot class information as indicated in function box 204. The multislot class may optionally detail the amount of blocks that are to be transmitted during an uplink. The maximum bitrate and multislot class is sent during the two phase access required to make a PACKET RESOURCE REQUEST (a request to the network to allocate resource). Two phase access comprises of two access bursts being required to transmit all the necessary data and is utilised for long TBFs. Bitrate information is not sent during a one phase access because there is insufficient space in the PACKET CHANNEL REQUEST MESSAGE at present. However, the inclusion of bitrate information in the PACKET CHANNEL REQUEST MESSAGE is contemplated.

Function box 206 details how the bitrate is sent to the network or BSS 210, if a downlink TBF is to be established. In this instance, the data rate is sent to the SGSN where it is stored as a part of the MS radio access capabilities. Subsequently, whenever a downlink TBF establishment request is sent to the BSS, the MS radio access capabilities are sent along with it. Finally, for a concurrent TBF (function box 208) the MS sends the above values for both the uplink and downlink through the procedures outlined above (function boxes 204 and 206).

The algorithm in the BSS determining allocation of resource is implementation dependent. This algorithm allocates TSs within the MS's capabilities (multislot class) and determines the level of encoding to be used in order to maximise the throughput of data within the limitation of the MS's maximum bitrate constraint. This is discussed further below.

The maximum data rate or bitrate is an average value. It is averaged over a radio block, which is 20 ms in duration, and it takes into account all of the radio data blocks sent and received by the MS on all TSs during that 20 ms period. A maximum bitrate is given by the equation:

$$\max\_bitrate(20ms) = \frac{\sum_{TS} DL\_data\_blocks(20ms) + \lambda \sum_{TS} UL\_data\_blocks(20ms)}{20ms}$$

in which *DL_data_blocks* represents the downlink data blocks 855 (BSS transmission) and *UL_data_blocks* represents the uplink data blocks 855 (BSS receipt).

This equation allows the number of uplink data blocks that would be expected to be supported at the maximum bitrate to be exceeded. The setting of $\lambda$ to a value below 1 achieves this (see values of $\lambda$ set out below). The number of uplink bocks be altered in this way because more system resource is required to deal with downlink blocks than with uplink blocks. As such, the system may deal with a larger number of uplink blocks than downlink blocks for the same cost in resources.

Signalling blocks, which are transmitted between the MS and the network are vice versa, have a negligible affect on the maximum bitrate. This is because, they are single blocks interspersed periodically between the data blocks. As such, they are given no weight in the above equation.

Regarding $\lambda$, the following values are possible:

| | |
|---|---|
| $\lambda = 0$ | The maximum bitrate is only dependent on DL blocks |
| $\lambda = 0.25$ | One DL block counts as four UL blocks for the maximum bitrate |
| $\lambda = 0.33$ | One DL block counts as three UL blocks for the maximum bitrate |
| $\lambda = 0.5$ | One DL block counts as two UL blocks for the maximum bitrate |
| $\lambda = 0.66$ | Two DL blocks count as three UL blocks for the maximum bitrate |
| $\lambda = 0.75$ | Three DL blocks count as four UL blocks for the maximum bitrate |
| $\lambda = 1$ | One DL block counts as one UL block for the maximum bitrate |

The proposed values for maximum bitrate are set out below. The maximum bitrate increases over the range 1 to n TS:

| | |
|---|---|
| 45 kbits/s | The MS supports all CSs on at least 2 TS (GPRS) |
| 65 kbits/s | The MS supports all (M)CSs on at least 3 TS (GPRS) or 1 TS (EGPRS) |
| 90 kbits/s | The MS supports all CSs on at least 4 TS (GPRS) |
| 110 kbits/s | The MS supports all CSs on at least 5 TS (GPRS) |
| 130 kbits/s | The MS supports all (M)CSs on at least 6 TS (GPRS) or 2 TS (EGPRS) |
| 155 kbits/s | The MS supports all CSs on at least 7 TS (GPRS) |
| 185 kbits/s | The MS supports all (M)CSs on at least 8 TS (GPRS) or 3 TS (EGPRS) |
| 250 kbits/s | The MS supports all MCSs on at least 4 TS (EGPRS) |
| 310 kbits/s | The MS supports all MCSs on at least 5 TS (EGPRS) |
| 370 kbits/s | The MS supports all MCSs on at least 6 TS (EGPRS) |
| 430 kbits/s | The MS supports all MCSs on at least 7 TS (EGPRS) |
| 495 kbits/s | The MS supports all MCSs on at least 8 TS (EGPRS) |
| 615 kbits/s | The MS supports all MCSs on at least 10 TS (EGPRS) |
| 740 kbits/s | The MS supports all MCSs on at least 12 TS (EGPRS) |
| 860 kbits/s | The MS supports all MCSs on at least 14 TS (EGPRS) |

It should be noted that the support of a CS or MCS on "n" TS means either "n" unidirectional downlink timeslots, "$\lambda*n$" unidirectional uplink timeslots, or a bidirectional TBF using the formula above.

These values are of more significance when viewed alongside Figures 3 and 4. These show the bitrates required in order to allow all levels of coding on each TS in a GPRS system, and in an EGPRS system. It is thus clear that at present, the number of time slots which may be utilised is hampered considerably by the coding scheme used (this is especially so in an EGPRS system).

Two example scenarios are presented below for the further clarification of this invention. These will be better understood after the description of allocation with reference to Figure 5 The BSS allocates "n" time slots to the MS using assignment messages. The value of n depends upon the MS's multislot class and the current radio resource availability. Function box 502 shows the step of the BSS choosing a coding scheme, or modulation and coding scheme, on each of the n allocated time slots. This choice is dependent upon the prevalent radio conditions. Function box 504 details the step of the BSS choosing a subgroup of useable time slots, depending upon the MS maximum bitrate and the bitrate per time slot (defined in Function Box 502). Both of these stages ensure that maximum throughput is achieved whilst the maximum bitrate constraint, delivered to the BSS with the multislot class, is respected. To do this, the allocation algorithm ensures that the product of the number of time slots being used with the bitrate associated with the encoding scheme being used on those time slots is less than the maximum bitrate constraint associated with the MS with which it is in communication (No. of TS * coding scheme bitrate $\leq$ max_bitrate). Once a TBF is underway, the BSS monitors the radio conditions (function box 506). If the radio conditions are unchanged, no action is taken. However, if the radio conditions improve or worsen, steps 502 and 504 are repeated in order to achieve the best throughput.

4

Example scenario 1:

A downlink EGPRS TBF is established towards a multislot class 7 MS (this class of MS can utilise a maximum of three time slots in either of the uplink or downlink directions, and can utilise a maximum of four time slots when uplink and downlink TBFs are both active). The MS indicates a maximum data rate of 65 kbits/s. In response to this, the network allocates three downlink time slots to the MS. Communication starts in bad radio conditions. All three time slots are used and modulation and coding schemes MCS-1 to MCS-4 are utilised in these time slots. Using MCS-4, the maximum net data bitrate is 3 x 19.25 = 57.75 kbits/s.

As time progresses radio conditions improve, therefore allowing the use of higher MCS's. The allocation algorithm and BSS downgrades the number of time slots used to 2. The MS is not notified of this change. Additionally, the network changes its modulation and coding scheme to MCS-5 and MCS-6. With MCS-6, a maximum net data bitrate is 2 x 31.1 = 62.2 kbits/s.

A little later, radio conditions become very good. The network downgrades the number of time slots used to 1, and utilises modulation and coding schemes MCS-7 to MCS-9. With MCS-9, the maximum data rate is 61,4 kbits/s.

Example scenario 2:

A downlink EGPRS TBF is established towards a MS of the same multislot class as used in Example 1. In this instance, the MS indicates a maximum bitrate of 130 kbits/s and λ = 1. The network allocates three time slots to the MS, but as radio conditions are good modulation and coding scheme 9 (MCS-9) is used on two time slots only. The third time slot is allocated but unused, because this use would exceed the 130 kbits/s limitation.

Whilst the downlink TBF is active, a request for an uplink (concurrent) TBF is sent by the MS. At this point, the network decides that 65 kbits/s will be allocated to the uplink and 65 kbits/s will be allocated to the downlink TBF. The network may still, decide to allocate three time slots on downlink, and to allocate one time slot on uplink. The radio conditions are still good, so MCS-9 is used. One time slot carries data in both directions, the two other time slots on downlink are allocated but not used. This arrangement results in a total throughput of 61.4 kbits/s in the uplink direction and 61.4 kbits/s in the downlink direction. As such total throughput is 122.8 kbits/s, which respects the MS maximum bitrate constraint of 130 kbits/s.

In view of these two examples, it is clear to see that due to the use of a maximum data rate constraint associated with an MS, in association with an allocation algorithm configured to utilise that constraint, the data throughput of an MS may be optimised. In particular, as the bitrate per time slot decreases, the number of time slots utilised increases, and vice versa. As such, as radio conditions vary, thus affecting the bitrate per time slot, the adaptation of the number of time slots utilised attempts to compensate for the change in bitrate per time slot, thereby providing an approximately constant bitrate to upper layers of the system.

In an EGPRS system, the complexity of equalisation and channel decoding is roughly linked to the MCS, i.e. to the bitrate. MCS's range from MCS-1 (which provides a low bitrate, a high amount of data protection, and is suited to bad radio conditions) to MSC-9 (which gives a high bitrate, a low amount of data protection, and is suited to good radio conditions). Low MCS's (MCS-1 to MCS-4) use GMSK modulation which is less complex than the 8-PSK modulation used by MCS-5 to MCS-9 providing a higher throughput. However, when using 8-PSK modulation, higher MCS's (MCS-8 and MCS-9) carry two data blocks in each radio block. This obviously has an associated increase in complexity. This relates to the L1 layer of control, and utilising the maximum bitrate as described above allows the optimisation of MS throughput taking into account L1 complexity limitations.

There are associated advantages for layer L3 (RLC/MAC level). The processing that occurs in the RLC layer is linked to the amount of data present in each RLC block, and the amount of data blocks. This depends upon the CS or MCS used, and thus upon the bitrate. As such, optimisation of MS throughput is beneficial at this layer also

In upper layers of the system, there may be limitations due to other interfaces (i.e. MS to laptop link) or application limitations. As an application sees a fairly constant throughput whatever the radio quality, it does not care whether the throughput uses one or 8 TSs on the radio interface. However, the above detailed improvements are especially important in the preparation for the handling of real time services which require a constant throughput of data.

Similarly, there is provided a system comprising the means to carry out the method detailed above, thereby achieving the detailed advantages.

It will be appreciated that although this method has been described referring mainly to EGPRS systems, it applies equally to other systems such as GSM/GPRS/EDGE systems.

Similarly, although this method and system have been described with regard to the transmission of a maximum bitrate value, an indication of which coding schemes, or modulation and coding schemes, are supported depending upon the amount of available time slots could be sent by the MS instead. Additionally, the MS could provide multiple pieces of information, either bitrate or which coding schemes are supported. These could be values relating to an uplink unidirectional TBF, a downlink unidirectional TBF, an uplink with concurrent TBF, or a downlink with concurrent TBF.

It will of course be understood that the present invention has been described above by way of example only, and that modifications of detail can be made within the scope of this invention in accordance with the appended claims.

**Claims**

1. A method for determining allocation of a resource in a cellular time slotted communications system comprising:

   providing information, consisting of an indication of a maximum bitrate of a mobile station, to a base station system;
   in the base station system, determining (502) a level of coding, or modulation and coding, to be used with each time slot allocated to a mobile station in accordance with current radio conditions and radio resource availability; and
   in the base station system, determining (504) a number of time slots to be used in a transmission, in accordance with a multislot class of the mobile station and the determined level of coding or modulation and coding, in order not to exceed the mobile station's maximum bitrate.

2. A method as claimed in claim 1, wherein the maximum bitrate is a radio interface bitrate either before channel coding or after channel coding.

3. A method as claimed in any preceding claim, wherein the providing information step comprises the step of transmitting a mobile station's maximum bitrate to a network.

4. A method as claimed in any preceding claim, wherein the maximum bitrate is transmitted to the network in a different manner according to the type of temporary block flow to be employed, the type being one of the following:

   uplink temporary block flow , downlink temporary block flow and concurrent temporary block flow.

5. A method as claimed in claim 4, wherein, if an uplink temporary block flow is to be employed, the maximum bitrate is transmitted with a mobile station multislot class, which indicates the number of time slots the mobile station can support.

6. A method as claimed in claim 5, wherein the information is transmitted as part of a PACKET RESOURCE REQUEST.

7. A method as claimed in claim 4, wherein, if a downlink temporary block flow is to be employed, the maximum bitrate is sent by the mobile station to a serving GPRS support node SGSN where it is stored as a part of mobile station radio access capabilities.

8. A method as claimed in claim 7, wherein the serving GPRS support node sends the mobile station radio access capabilities to a base station system in the network when requesting establishment of a downlink temporary block flow between the base station system and the mobile station.

9. A method as claimed in claim 4, wherein, if a concurrent temporary block flow is to be employed, the maximum bitrate is transmitted with a mobile station multislot class and to a serving GPRS support node where it is stored as a part of the mobile station radio access capabilities.

10. A method as claimed in any preceding claim, wherein the maximum bitrate is given by the equation:

$$\text{max\_}bitrate(20\,ms) = \frac{\sum_{TS} DL\_data\_blocks(20\,ms) + \lambda \sum_{TS} UL\_data\_blocks(20\,ms)}{20\,ms}$$

in which DL_data_blocks represents the downlink data blocks, UL_data_blocks represents the uplink data blocks and $\lambda$ is a value between 0 and 1.

**11.** A method as claimed in claim 1, comprising the further step of monitoring radio conditions and, if necessary, adjusting the number of time slots used and/or the coding, or modulation and coding, scheme used therewith, to retain maximum throughput, whilst remaining within the mobile station's maximum bitrate.

**12.** A method as claimed in claim 1, wherein the providing information step comprises the further step of providing, by a mobile station, an indication of the coding schemes or modulation and coding schemes supported by the mobile station,
wherein the step of determining (502) a level of coding, or modulation and coding, to be used with each time slot allocated to a mobile station comprises the step of determining one of the indicated coding schemes or modulation and coding schemes to be used with each time slot in accordance with the current radio conditions and radio resource availability.

**13.** An arrangement for determining allocation of a resource in a cellular time slotted communications system, said arrangement comprising:

means for providing information,consisting of an indication of a maximum bitrate of a mobile station,to a base station system;
means for determining, in the base station system, a level of coding, or modulation and coding, to be used with each time slot allocated to a mobile station in accordance with current radio conditions and radio resource availability; and
means for determining, in the base station system, a number of time slots to be used in a transmission, in accordance with a multislot class of the mobile station and the determined level of coding or modulation and coding, in order not to exceed the mobile station's maximum bitrate.

**14.** An arrangement as claimed in claim 13, further comprising
means for monitoring radio conditions and adjusting the number of utilised time slots and the coding, or modulation and coding, scheme accordingly, if required.

**15.** The arrangement as claimed in claim 13 or 14,
wherein the means for providing information comprises means for transmitting the maximum bitrate to a network.

**16.** The arrangement as claimed in claim 13 or 14,
wherein the means for providing information comprises means for transmitting an indication of the coding schemes or modulation and coding schemes supported by the mobile station.

**Patentansprüche**

**1.** Verfahren zur Bestimmung der Zuordnung einer Ressource in einem zellularen Zeitschlitz-Kommunikationssystem, welches Folgendes aufweist:

Bereitstellen von Informationen, die aus einer Angabe einer maximalen Bitrate einer Mobilstation bestehen, an ein Basisstationssystem;
in dem Basisstationssystem, Bestimmen (502) einer Codierungsstufe oder Modulations- und Codierungsstufe, zur Verwendung mit jedem Zeitschlitz, der einer Mobilstation gemäß gegenwärtigen Funkzuständen und Funkressourcenverfügbarkeit zugeordnet ist; und
in dem Basisstationssystem, Bestimmen (504) einer Anzahl von in einer Übertragung zu verwendenden Zeitschlitzen gemäß einer Multislotklasse der Mobilstation und der festgelegten Codierungsstufe oder Modulationsund Codierungsstufe, um die maximale Bitrate der Mobilstation nicht zu überschreiten.

**2.** Verfahren nach Anspruch 1, **dadurch gekennzeichnet, dass** die maximale Bitrate eine Funkschnittstellenbitrate entweder vor der Kanalcodierung oder nach der Kanalcodierung ist.

**3.** Verfahren nach einem der vorhergehenden Ansprüche, **dadurch gekennzeichnet, dass** der Schritt der Bereitstellung von Informationen den Schritt der Übertragung der maximalen Bitrate einer Mobilstation an ein Netzwerk umfasst.

**4.** Verfahren nach einem der vorhergehenden Ansprüche, **dadurch gekennzeichnet, dass** die maximale Bitrate gemäß der Art des zu verwendenden temporären Blockflusses auf eine unterschiedliche Art und Weise an das Netzwerk übertragen wird, wobei die Art eine der Folgenden ist:

aufwärtsverbindungstemporärer Blockfluss, abwärtsverbindungstemporärer Blockfluss und gleichzeitig stattfindender temporärer Blockfluss.

5. Verfahren nach Anspruch 4, **dadurch gekennzeichnet, dass**, wenn ein aufwärtsverbindungstemporärer Blockfluss verwendet werden soll, die maximale Bitrate mit einer Mobilstation-Mulitslot-Klasse übertragen wird, welche die Anzahl der Zeitschlitze angibt, die die Mobilstation unterstützen kann.

6. Verfahren nach Anspruch 5, **dadurch gekennzeichnet, dass** die Informationen als Teil einer Paket-Ressource-Anforderung bzw. PACKET RESOURCE REQUEST übertragen werden.

7. Verfahren nach Anspruch 4, **dadurch gekennzeichnet, dass**, wenn ein abwärtsverbindungstemporärer Blockfluss verwendet werden soll, die maximale Bitrate von der Mobilstation an einen bedienenden GPRS-Unterstützungsknoten bzw. Serving GPRS Support Node SGSN gesendet wird, wo sie als Teil der Funkzugriffsfähigkeiten der Mobilstation gespeichert wird.

8. Verfahren nach Anspruch 7, **dadurch gekennzeichnet, dass** der bedienende GPRS-Unterstützungsknoten die Funkzugriffsfähigkeiten der Mobilstation an ein Basisstationssystem in dem Netzwerk sendet, wenn die Einrichtung eines abwärtsverbindungstemporären Blockflusses zwischen dem Basisstationssystem und der Mobilstation angefordert wird.

9. Verfahren nach Anspruch 4, **dadurch gekennzeichnet, dass**, wenn ein gleichzeitig stattfindeter temporärer Blockfluss verwendet werden soll, die maximale Bitrate mit einer Multislotklasse der Mobilstation und an einen bedienenden GPRS-Unterstützungsknoten übertragen wird, wo sie als ein Teil der Funkzugriffsfähigkeiten der Mobilstation gespeichert wird.

10. Verfahren nach einem der vorhergehenden Ansprüche, **dadurch gekennzeichnet, dass** die maximale Bitrate durch die Gleichung

$$max\_bitrate(20ms) = \frac{\sum_{TS} DL\_data\_blocks(20ms) + \lambda \sum_{TS} UL\_data\_blocks(20ms)}{20ms}$$

gegeben ist, in der DL_data_blocks die Datenblöcke der Abwärtsverbindung darstellt, UL_data_blocks die Datenblöcke der Aufwärtsverbindung darstellt und $\lambda$ ein Wert zwischen 0 und 1 ist.

11. Verfahren nach Anspruch 1, welches des Weiteren den Schritt der Überwachung der Funkzustände umfasst und, wenn notwendig, der Anpassung der Anzahl von verwendeten Zeitschlitzen und/oder der dabei verwendeten Codierungsschemas oder Modulations- und Codierungsschemas, um den maximalen Datendurchfluss aufrecht zu erhalten, während man innerhalb der maximalen Bitrate der Mobilstation bleibt.

12. Verfahren nach Anspruch 1, **dadurch gekennzeichnet, dass** der Schritt der Bereitstellung von Informationen des Weiteren den Schritt der Bereitstellung einer Angabe der von der Mobilstation unterstützten Codierungsschemata oder Modulations- und Codierungsschemata durch eine Mobilstation umfasst,
wobei der Schritt der Bestimmung (502) einer Codierungsstufe oder Modulations- und Codierungsstufe, die mit jedem einer Mobilstation zugeordneten Zeitschlitz verwendet werden soll, den Schritt der Bestimmung eines der angegebenen Codierungsschemata oder Modulations- und Codierungsschemata umfasst, die gemäß den gegenwärtigen Funkzuständen und der Funkressourcenverfügbarkeit mit jedem Zeitschlitz verwendet werden sollen.

13. Anordnung zur Bestimmung der Zuordnung einer Ressource in einem zellularen Zeitschlitz-Kommunikationssystem, wobei die Anordnung Folgendes aufweist:

Vorrichtung zur Bereitstellung von Informationen, die aus einer Angabe einer maximalen Bitrate einer Mobilstation bestehen, an ein Basisstationssystem;

Vorrichtung zur Bestimmung einer Codierungsstufe oder Modulations- und Codierungsstufe in dem Basisstationssystem, die gemäß gegenwärtigen Funkzuständen und der Funkressourvenverfügbarkeit mit jedem einer Mobilstation zugeordneten Zeitschlitz verwendet werden sollen; und

Vorichtung zur Bestimmung einer Anzahl von in einer Übertragung zu verwendenden Zeitschlitzen in dem Basisstationssystem gemäß einer Multislot-Klasse der Mobilstation und der festgelegten Codierungsstufe oder Modulations- und Codierungsstufe, um die maximale Bitrate der Mobilstation nicht zu überschreiten.

**14.** Anordnung nach Anspruch 13, welche des Weiteren Folgendes aufweist:

Vorrichtung zur Überwachung der Funkzustände und Anpassung der Anzahl von verwendeten Zeitschlitzen und des Codierungsschemas oder Modulations- und Codierungsschemas, wenn dies notwendig ist.

**15.** Anordnung nach einem der Ansprüche 13 oder 14, **dadurch gekennzeichnet, dass** die Vorrichtung zur Bereitstellung von Informationen Mittel zur Übertragung der maximalen Bitrate an das Netzwerk umfasst.

**16.** Anordnung nach einem der Ansprüche 13 oder 14, **dadurch gekennzeichnet, dass** die Vorrichtung zur Bereitstellung von Informationen Mittel zur Übertragung einer Angabe der von der Mobilstation unterstützten Codierungsschemata oder Modulations- und Codierungsschemata aufweist.

## Revendications

**1.** Procédé destiné à déterminer une affectation de ressources dans un système de communication à tranches de temps cellulaire comportant les étapes consistant à:

fournir des informations, constituées d'une indication d'un débit binaire maximum d'une station mobile, à un système de station de base;

dans le système de station de base, déterminer (502) un niveau de codage, ou de modulation et de codage, à utiliser avec chaque tranche de temps affectée à une station mobile selon des conditions radio en cours et une disponibilité de ressources radio; et

dans le système de station de base, déterminer (504) un certain nombre de tranches de temps à utiliser dans une transmission, selon une classe à tranches de temps multiples de la station mobile et le niveau déterminé de codage ou de modulation et de codage, afin de ne pas excéder le débit binaire maximum de la station mobile.

**2.** Procédé selon la revendication 1, dans lequel le débit binaire maximum est un débit binaire d'interface radio avant le codage de canal ou après le codage de canal.

**3.** Procédé selon l'une quelconque des revendications précédentes, dans lequel l'étape de transmission des informations comporte l'étape de transmission du débit binaire maximum d'une station mobile à un réseau.

**4.** Procédé selon l'une quelconque des revendications précédentes, dans lequel le débit binaire maximum est transmis au réseau d'une façon différente selon le type de flux de bloc temporaire à utiliser, le type étant l'un des suivants: flux de bloc temporaire en liaison montante, flux de bloc temporaire en liaison descendante et flux de bloc temporaire en simultané.

**5.** Procédé selon la revendication 4, dans lequel, si un flux de bloc temporaire en liaison montante doit être utilisé, le débit binaire maximum est transmis avec une classe à tranches de temps multiples de station mobile, qui indique le nombre de tranches de temps que la station mobile peut prendre en charge.

**6.** Procédé selon la revendication 5, dans lequel les informations sont transmises en tant qu'élément d'une DEMANDE DE RESSOURCES DE PAQUET.

**7.** Procédé selon la revendication 4, dans lequel, si un flux de bloc temporaire en liaison descendante doit être utilisé, le débit binaire maximum est envoyé par la station mobile à un noeud de support GPRS de service SGSN où il est stocké en tant qu'élément de capacités d'accès radio de station mobile.

**8.** Procédé selon la revendication 7, dans lequel le noeud de support GPRS de service transmet les capacités d'accès radio de station mobile à un système de station de base dans le réseau lors d'une demande d'établissement d'un flux de bloc temporaire en liaison descendante entre le système de station de base et la station mobile.

9. Procédé selon la revendication 4, dans lequel, si un flux de bloc temporaire en simultané doit être utilisé, le débit binaire maximum est transmis avec une classe à tranches de temps multiples de station mobile et à un noeud de support GPRS de service où il est stocké en tant qu'élément des capacités d'accès radio de station mobile.

10. Procédé selon l'une quelconque des revendications précédentes, dans lequel le débit binaire maximum est donné par l'équation:

$$\mathrm{max\_}bitrate(20\,ms) = \frac{\sum_{TS} DL\_data\_blocks(20ms) + \lambda \sum_{TS} UL\_data\_blocks(20ms)}{20\,ms}$$

dans lequel DL_data_blocks représente les blocs de données en liaison descendante, UL data blocks représente les blocs de données en liaison montante et λ est une valeur entre 0 et 1.

11. Procédé selon la revendication 1, comportant en outre l'étape consistant à surveiller des conditions radio et, si nécessaire, à régler le nombre de tranches de temps utilisées et/ou le schéma de codage, ou de modulation et de codage, utilisé en outre, afin de conserver un débit maximum, tout en restant dans le débit binaire maximum de la station mobile.

12. Procédé selon la revendication 1, dans lequel l'étape de transmission des informations comporte en outre l'étape consistant à fournir, par une station mobile, une indication des schémas de codage ou des schémas de codage et modulation prise en charge par la station mobile,
dans lequel l'étape consistant à déterminer (502) un niveau de codage, ou de modulation et de codage, à utiliser avec chaque tranche de temps affectée à une station mobile comporte l'étape consistant à déterminer un des schémas de codage ou un des schémas de codage et de modulation indiqués à utiliser avec chaque tranche de temps selon les conditions radio en cours et une disponibilité de ressources radio.

13. Agencement destiné à déterminer une affectation de ressources dans un système de communication à tranches de temps cellulaire, ledit agencement comportant:

un moyen destiné à transmettre des informations, constituées d'une indication d'un débit binaire maximum d'une station mobile, à un système de station de base;
un moyen destiné à déterminer, dans le système de station de base, un niveau de codage, ou de modulation et de codage, à utiliser avec chaque tranche de temps affectée à une station mobile selon des conditions radio en cours et une disponibilité de ressources radio; et
un moyen destiné à déterminer, dans le système de station de base, un certain nombre de tranches de temps à utiliser dans une transmission, selon une classe à tranches de temps multiples de la station mobile et le niveau déterminé de codage ou de modulation et de codage, pour ne pas excéder le débit binaire maximum de la station mobile.

14. Agencement selon la revendication 13, comportant en outre
un moyen destiné à surveiller les conditions radio et à régler le nombre de tranches de temps utilisées et le schéma de codage, ou le schéma de modulation et de codage, par conséquent, si nécessaire.

15. Agencement selon la revendication 13 ou 14, dans lequel le moyen de transmission des informations comporte un moyen de transmission du débit binaire maximum à un réseau.

16. Agencement selon la revendication 13 ou 14, dans lequel le moyen de transmission des informations comporte un moyen de transmission d'une indication des schémas de codage ou des schémas de modulation et de codage pris en charge par la station mobile.

RADIO ACCESS
CAPABILITY DETAILS

| MS | MAX BIT RATE | NETWORK |

## FIG. 1

UPLINK TBF → SEND INFORMATION WITH MULTISLOT CLASS INFORMATION DURING TWO-PHASE ACCESS — 204

202 — MS

DOWNLINK TBF → SEND INFORMATION TO SGSN AS PART OF "MS RADIO CAPABILITIES" — 206

CONCURRENT TBF → SEND SAME VALUE FOR UPLINK AND DOWNLINK THROUGH ABOVE PROCEEDURES — 208

210 — NETWORK (BSS)

## FIG. 2

IN BSS

502 — DETERMINE CODING SCHEME TO BE USED IN EACH MS

504 — DETERMINE SUBGROUP OF TS's TO BE USED IN TBF

SAME     BETTER/WORSE

MONITOR RADIO CONDITIONS? — 506

## FIG. 5

**FIG. 3**

⟶ kbits/s

**FIG. 4**

⟶ kbits/s